# EUROPEAN PATENT APPLICATION

(11) **EP 4 800 285 A1**
(43) Date of publication of application: **02.09.2026**
(21) Application number: 26153216.2
(22) Date of filing: 21.01.2026
(51) Int. Cl.: F17C 3/08

(54) **APPARATUSES, SYSTEMS COMPRISING A TANK, AND METHODS COMPRISING A TANK**

(30) Priority: 27.02.2025 US 202563764473 P; 21.07.2025 US 202519275700
(71) Applicant: The Boeing Company, Arlington, VA 22202 (US)
(72) Inventor: HASAN, Jahid, Arlington, 22202 (US); KUTZMANN, Aaron Jonathan, Arlington, 22202 (US); SARTORIOUS, Thomas Skyler, Arlington, 22202 (US)
(74) Representative: Lissandrini, Marco

(57) **Abstract**

An apparatus comprises a tank and the tank comprises an inner wall configured to hold liquid, an outer wall surrounding the inner wall, and a gap separating the inner wall and the outer wall. The exemplary apparatus further comprises a flow component configured to, in a first mode, flow fluid into the gap and, in a second mode, flow the fluid out of the gap. A system includes the tank, the flow component, and a reservoir. In the first mode, the flow component is configured to flow the fluid from the reservoir into the gap. In the second mode, the flow component is configured to flow the fluid from the gap into the reservoir. A method comprises flowing the fluid into the gap of the tank and flowing the fluid out of the gap.

## Description

### RELATED APPLICATION

The present application is a non-provisional of and claims priority to U.S. Provisional Patent Application No. 63/764,473, filed on February 27, 2025, entitled " APPARATUSES, SYSTEMS COMPRISING A TANK, AND METHODS COMPRISING A TANK".

### FIELD

The present disclosure relates to an apparatus, a system comprising a tank, and methods comprising a tank.

### BACKGROUND

Certain fluids are stored at low temperatures, but during use, the temperature of the fluid is increased. Examples of this type of fluid are cryogenic fuels, helium, pressurants, and oxidizers. Thus, there is a need for storage that can maintain the fluid at low temperatures but also raise the temperature of the fluid during use.

### SUMMARY

An apparatus, a system comprising a tank, and methods comprising a tank are disclosed. In some examples, an apparatus comprises a tank and the tank comprises an inner wall configured to hold liquid, an outer wall surrounding the inner wall, and a gap separating the inner wall and the outer wall. The exemplary apparatus further comprises a flow component configured to, in a first mode, flow fluid into the gap and, in a second mode, flow the fluid out of the gap.

In some examples, a system includes a tank comprising an inner wall, an outer wall, a gap, and a flow component. The exemplary system further comprises a flow component and a reservoir and, in a first mode, the flow component is configured to flow the fluid from the reservoir into the gap. In a second mode, the flow component is configured to flow the fluid from the gap into the reservoir.

In some examples, a method comprises flowing a fluid into a gap of a tank comprising an inner wall, an outer wall, and a gap. The exemplary method further comprises flowing the fluid out of the gap.

### BRIEF DESCRIPTION OF THE DRAWINGS

Fig. 1 is a schematic diagram representing an apparatus and a system comprising a tank.
Fig. 2 is a flowchart schematically representing methods of flowing fluid into and out of a gap of a tank.
Fig. 3 is a perspective view of an example aircraft comprising a tank.

### DESCRIPTION

An apparatus, a system comprising a tank, and methods comprising a tank are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

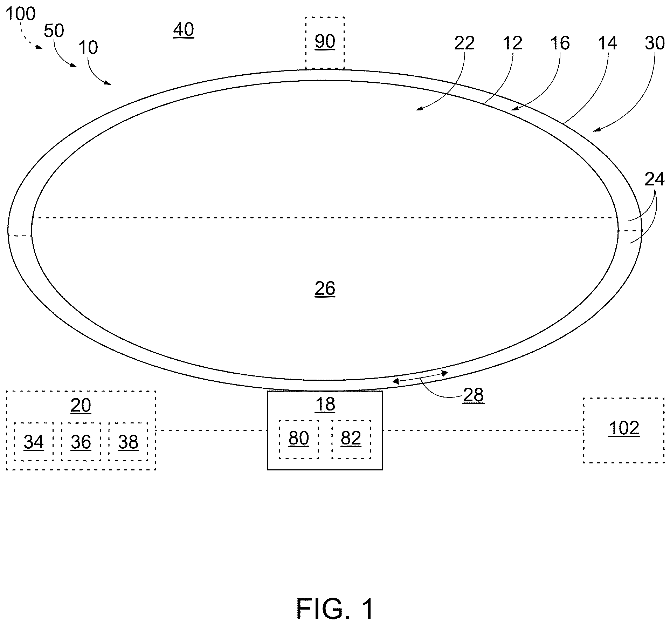

As schematically illustrated in Fig. 1, an apparatus 50 comprises a tank 10 and a flow component 18. Tank 10 comprises at least an inner wall 12, an outer wall 14, and gap 16. Inner wall 12 is configured to hold liquid 26, outer wall 14 surrounds inner wall 12, and gap 16 separates inner wall 12 and outer wall 14. Flow component 18 is configured to function in two modes. In a first mode, flow component 18 flows fluid 28 into gap 16. In a second mode, flow component 18 flows fluid 28 out of gap 16.

Examples of tank 10 form a double wall insulated structure. Double wall insulated structures are used to reduce heat transfer between an interior of the double wall insulated structure and an exterior of the double wall insulated structure. In common examples of double wall insulated structures, two walls contain a partial vacuum within the walls and the vacuum reduces heat transfer through the gap between the walls. In this example, the vacuum reduces at least convection and conduction heat transfer between the interior of the double wall insulated structure and the exterior of the double wall insulated structure. Thus, a common use for containers formed from double wall insulated structures is to store liquids which must be kept at a low temperature, e.g. nitrogen, helium, argon, cryogenic fuel, pressurants, oxidizers.

Fig. 1 depicts an example of inner wall 12, gap 16, and outer wall 14 forming an insulated double wall 30. In one mode of the example, gap 16 comprises a partial vacuum. Thus, double wall 30 is configured to reduce heat transfer between an exterior 40 and an interior 22 of tank 10 when a partial vacuum is present in gap 16.

Fig. 1 depicts an example of inner wall 12 configured to hold liquid 26 within an interior 22 of inner wall 12. Inner wall 12 is also configured to hold vaporized liquid 26 within inner wall 12. In one example, liquid 26 is cryogenic fuel which is stored as a liquid but is vaporized for use as fuel. In this example, tank 10 holds a majority of the cryogenic fuel as liquid 26, and some of liquid 26 is vaporized to be drawn out though a port 90. Examples of port 90 comprise one or more passages which allow for flowing liquid 26 into tank 10 and flowing vaporized liquid 26 out of tank 10.

Inner wall 12 further provides structural integrity and protection against rupture of tank 10. Inner wall 12 also forms gap 16 along with outer wall 14. Outer wall 14 similarly provides structural integrity and protection against rupture of tank 10. Outer wall 14 also forms gap 16 along with inner wall 12.

Inner wall 12 and outer wall 14 can be comprised of a variety of materials including, but not limited to: aluminum, steel, brass, composite material, composite overwrap, or a combination of thermally conductive material and composite material. For example, many common double walled insulated tanks are comprised of stainless steel. An example of tank 10 may be a composite overwrapped pressure tank, which is comprised of composite materials forming a carbon overwrap. A composite overwrapped pressure tank comprises a thin, non-structural liner wrapped with a structural fiber composite. The fiber composite provides the strength to the tank to contain pressure. The liner provides a barrier between the fluid and the composite to prevent leaks, as the composite may not be liquid or vapor tight. A protective shell may also be used. Common composite materials are fiber reinforced polymers using carbon and kevlar fibers. Examples of carbon overwrap tanks weigh less than a comparable metallic tank.

Examples of tank 10 are comprised of more than one type of material. For example, inner wall 12 may be comprised of a first material and outer wall 14 may be comprised of a second material. In one example, outer wall 14 may be comprised of composite materials with a lower thermal conductivity while inner wall 12 is comprised of a material with a higher thermal conductivity, such as steel. This example would allow fluid 28 within gap 16 to have a better heat transfer through inner wall 12 to liquid 26 compared to the heat transfer through outer wall 14 to exterior 40 of the tank 10. In further examples, inner wall 12 and outer wall 14 are comprised of multiple types of materials. In one example, a bottom of inner wall 12 is comprised of a higher heat transfer material, such as metal, while a top of inner wall 12 is comprised of a lower heat transfer material, such as a composite material. This example would allow for greater heat transfer to the bottom of tank 10 where liquid 26 is stored while insulating the remainder of the tank 10. Examples of outer wall 14 are similarly comprised of different materials, such as a first material on a top side and a second material on a bottom side.

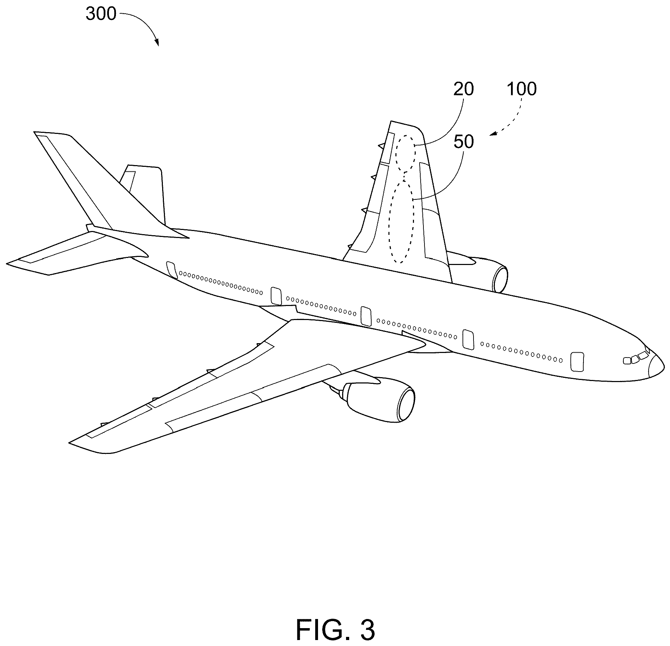

Examples of tank 10, inner wall 12, and outer wall 14 have a variety of shapes. For example, outer wall 14 of tank 10 may form a sphere or cylinder. Further examples of outer wall 14 of tank 10 may be shaped to fit particular applications. For example, Fig. 3 depicts tank 10 arranged within a vehicle 300, which is an aircraft in this example.

Gap 16 is formed by inner wall 12 and outer wall 14 and formed between inner wall 12 and outer wall 14. Examples of gap 16 hold a partial vacuum or fluid 28 within gap 16. Changing of the substance or a lack of substance within gap 16 allows for adjusting of the thermal conductivity properties of tank 10. In one example, thermal conductivity between exterior 40 and interior 22 of tank 10 is lower when gap 16 contains a partial vacuum than when gap 16 contains fluid 28. Examples of fluid 28 within gap 16 allow for greater heat transfer between exterior 40 and interior 22 through fluid 28. In further examples, fluid 28 has a greater temperature than liquid 26 and fluid 28 within gap 16 transfers heat to liquid 26 within tank 10.

Examples of gap 16 also may comprise zones 24. In one example depicted in Fig. 1, gap 16 comprises at least two zones 24, and flow component 18 is configured to selectively flow fluid 28 into or out of each individual zone 24. Examples of gap 16 comprising zones 24 allow for further adjustability of the thermal conductivity of tank 10. In one example, gap 16 is divided into a top zone 24 and a bottom zone 24. Fluid 28 is selectively flowed into bottom zone 24 to increase heat transfer to liquid 26 within the bottom of interior 22. In this example, a partial vacuum is maintained within top zone 24 to reduce heat transfer to a portion of tank 10 which does not contain liquid 26.

Flow component 18 is configured to, in a first mode, flow fluid 28 into gap 16 and, in a second mode, flow fluid 28 out of gap 16. Examples of flow component 18 comprise at least one of a pump 80 and a valve 82. In one example, flow component 18 comprises one valve 82 and one pump 80. In the example, valve 82 allows fluid 28 to flow into gap 16 and pump 80 pumps fluid 28 out of gap 16. In further detail of the example, a partial vacuum is created in gap 16, and fluid 28 flows into gap 16 when valve 82 is opened due to the low pressure within gap 16. Pump 80 is then used to pump fluid 28 out of gap 16. In this example, liquid 26 in tank 10 is cryogenic fuel and fluid 28 is flowed into gap 16 to increase a rate of vaporization of the cryogenic fuel. Then, when the cryogenic fuel is no longer in use, pump 80 is used to remove fluid 28 from gap 16 to decrease heat transfer into the cryogenic fuel, reducing vaporization while the cryogenic fuel is in storage.

As described above, some examples of flow component 18 are configured to create at least a partial vacuum within gap 16. A vacuum within gap 16 reduces heat transfer between interior 22 and exterior 40 of tank 10. Some examples of flow component 18 comprise one or more valves 82 connected to a reservoir 20 which remove fluid 28 from gap 16. Reservoir 20 may be a vacuum reservoir 38, atmosphere, or a passage 36 connected to a pressure lower than the pressure in gap 16. Examples of valve 82 of flow component 18 are also selectively connectable to external sources of higher pressure. For example, gap 16 comprises a partial vacuum, and valve 82 opens to allow fluid 28 stored in reservoir 20, which has a higher pressure than gap 16, to flow into gap 16.

In another example, flow component 18 comprises two valves 82. In this example, a first valve 82 allows fluid 28 to flow into gap 16 and second valve 82 allows fluid 28 to flow out of gap 16. Fluid 28 is stored in reservoir 20 and first valve 82 allows fluid 28 to fill the partial vacuum within gap 16. Second valve 82 then connects gap 16 to vacuum reservoir 38 which allows fluid 28 to flow out of gap 16 and into vacuum reservoir 38.

Examples of fluid 28 act as a medium for adjusting the heat transfer between exterior 40 and interior 22 of tank 10. As described above, the presence or lack thereof of fluid 28 within gap 16 affects the rate of heat transfer between exterior 40 and interior 22 of tank 10. Examples of fluid 28 are inert. Inert fluids may provide safety and environmental advantages over more reactive fluids. Further examples of fluid 28 are nitrogen, helium, or argon. Other examples of fluid 28 are air. Air could be drawn from and discharged to atmosphere, which may reduce the need for storage of fluid 28. In one example, fluid 28 is air and fluid 28 is drawn from a compressor of a turbine into gap 16 and then fluid 28 is vented from gap 16 to atmosphere. Examples of fluid 28 are chosen based on the needs of a specific application. Such examples of fluid 28 are non-reactive with ambient air and are not greenhouse gases.

Furthermore, a boiling point of fluid 28 can influence heat transfer between exterior 40 and interior 22 of tank 10. In some examples, a boiling point of fluid 28 is lower than a working temperature for tank 10. In this example, fluid 28 is stored as a liquid and changes into a gas state after entering gap 16. This example moves heat throughout tank 10 by fluid 28 evaporating in regions of greater temperature and condensing in regions of lower temperature, similarly to operation of a heat pipe. In other examples, the boiling point of fluid 28 is greater than a working temperature of tank 10 to keep fluid 28 liquid during operation. Examples of working temperature are based on the boiling point of liquid 26 and examples of working temperature are -265 to -253 degrees Celsius for hydrogen, -183 to -161 degrees Celsius for methane, -44 to -42.2 degrees Celsius for propane, -127 to -88.3 degrees Celsius for ethane, and -103 to -75 degrees Celsius for acetylene.

In examples where liquid 26 is a cryogenic fuel which is vaporized for use, the working temperature of tank 10 is approximately a boiling point of the cryogenic fuel. For example, a freezing point of fluid 28 is less than a working temperature of liquid 26, the boiling point of fluid 28 is greater than a working temperature of liquid 26 and the boiling point of fluid 28 is less than a minimum ambient temperature. Examples of a minimum ambient temperature are -60, -50, -40, -30, -20, and -10 degrees Celsius. In another example, the boiling point of fluid 28 is less than a working temperature of liquid 26, the boiling point of fluid 28 is less than a minimum ambient temperature, and the working temperature of liquid 26 is less than the minimum ambient temperature.

Furthermore, the freezing points, boiling points and other characteristics of liquids 26 and fluids 28 can be used to select combinations for specific applications. In some examples, liquid 26 is methane and fluid 28 is nitrogen, liquid 26 is methane and fluid 28 is argon, liquid 26 is hydrogen and fluid 28 is helium, and liquid 26 is hydrogen and fluid 28 is deuterium.

In further examples, apparatus 50 is part of a system 100 and system 100 comprises reservoir 20. Examples of reservoir 20 selectively comprise fluid 28. For example, in a first mode, flow component 18 is configured to flow fluid 28 from reservoir 20 into gap 16 and, in a second mode, flow component 18 is configured to flow fluid 28 from gap 16 into reservoir 20. Examples of reservoir 20 comprise one or more of a vessel 34, a vacuum reservoir 38, and an air passage 36 connected to a compressor or turbine.

In further specific examples, fluid 28 is air and reservoir 20 comprises an air passage 36 connected to atmosphere or a compressor of a turbine. In a first mode of the example, reservoir 20 is connected to gap 16. This connection allows air to enter gap 16 from reservoir 20. In some examples, reservoir 20 is at a higher pressure than gap 16 due to the compressor and/or gap 16 is at a lower pressure due to a partial vacuum present in gap 16. As described above, fluid 28 brought into gap 16 selectively increases heat transfer from exterior 40 to interior 22 of tank 10. Increasing heat transfer into interior 22 can be used to increase vaporization of liquid 26, such as a cryogenic fuel or pressurant.

In further examples, reservoir 20 comprises a vessel 34 configured to hold fluid 28, and flow component 18 is connected to reservoir 20. In this example, flow component 18 is configured to flow fluid 28 from reservoir 20 into gap 16 in a first mode and is configured to flow fluid 28 from gap 16 into reservoir 20 in a second mode. In other words, flow component 18 is configured to flow fluid 28 from vessel 34 into gap 16 in the first mode and flow the fluid 28 from gap 16 back into the vessel 34 in the second mode. For example, tank 10 holds liquid 26 which is methane and reservoir 20 holds fluid 28 which is nitrogen. Flow component 18 is configured to selectively flow nitrogen into and out of gap 16 to selectively control the rate of vaporization of methane within the tank 10.

In still further examples, reservoir 20 comprises a vacuum reservoir 38 and, in a second mode, gap 16 is connected to reservoir 20. Connecting gap 16 to vacuum reservoir 38 allows for removal of fluid 28 from gap 16 and generation of at least a partial vacuum within gap 16. Removing fluid 28 from gap 16 and creating vacuum within gap 16 selectively decreases heat transfer from exterior 40 to interior 22 of tank 10. Decreasing heat transfer into interior 22 can be used to decrease vaporization of liquid 26 and decrease a rate of pressure increase within tank 10 for storage of liquid 26.

System 100 further comprises an offboard pump or vacuum reservoir 102 in further examples. Offboard pump or vacuum reservoir 102 is configured to be selectively connected to gap 16 and configured to create a partial vacuum in gap 16 of lower pressure than a partial vacuum created by flow component 18. Creating a vacuum of lower pressure in gap 16 can further decrease heat transfer from exterior 40 into an interior 22 of tank 10 and allow for storage of liquid 26 for longer periods of time. For example, a vehicle 300 is an aircraft comprising tank 10 and offboard pump or vacuum reservoir 102 is connected to gap 16 to create a lower pressure vacuum when the vehicle 300 is grounded.

Fig. 3 depicts an example of vehicle 300 comprising system 100. System 100 of Fig. 3 comprises apparatus 50 and reservoir 20. In the example of Fig. 3, vehicle 300 is an aircraft. In other examples, vehicle 300 is a spacecraft.

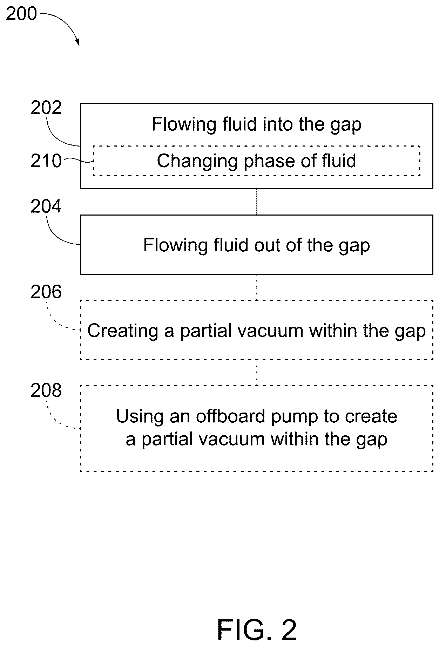

Fig. 2 schematically provides a flowchart that represents illustrative, non-exclusive examples of methods 200 according to the present disclosure. In Fig. 2, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 2 are not limiting and other methods and steps are within the scope of the present disclosure, including methods having greater than or fewer than the number of steps illustrated, as understood from the discussions herein.

As seen in Fig. 2, method 200 includes flowing 202 fluid 28 into a gap 16 of a tank 10 of an apparatus 50 and flowing 204 fluid 28 out of gap 16. Fig. 1 depicts fluid 28 flowing in both directions through gap 16 which represents fluid 28 flowing into gap 16 from a flow component 18 and fluid 28 flowing out of gap 16 via flow component 18. Examples of flow of fluid 28 are driven by one or more pumps 80 of flow component 18 and other examples are driven by valves 82 of flow component 18 connecting fluid 28 to areas of lower pressure such that fluid 28 is drawn into or out of gap 16. In one example, flowing 204 fluid 28 out of gap 16 comprises at least one of flow component 18 pumping fluid 28 out of gap 16 and connecting gap 16 to a vacuum reservoir 38.

As discussed above, the presence or absence of fluid 28 within gap 16 affects heat transfer through gap 16. Further examples of method 200 comprise flowing 202 fluid 28 into gap 16 to increase a rate of heat transfer to liquid 26 within inner wall 12 and flowing 204 fluid 28 out of gap 16 to decrease a rate of heat transfer to liquid 26 within inner wall 12.

Fig. 2 also depicts method 200 optionally comprising creating 206 a partial vacuum within gap 16. Examples comprising a partial vacuum within gap 16 reduce heat transfer from an exterior 40 to an interior 22 of tank 10.

Fluid 28 also changes phase within gap 16 in some examples. For example, Fig. 2 depicts changing a phase 210 of fluid 28 after flowing 202 fluid 28 into gap 16. In further detail, examples of fluid 28 are stored as a liquid for space efficiency and fluid 28 changes into a gas state after entering gap 16. Fluid 28 changing into a gas state absorbs heat in one region of gap 16 and condenses in another region of gap 16 releasing heat. This cycle of evaporation and condensation can move heat throughout tank 10 similarly to operation of a heat pipe. In other examples, fluid 28 is stored as a gas and changes phase between liquid and gas within gap 16.

In some examples, flowing 202 fluid 28 into gap 16 further comprises increasing a rate of vaporization of liquid 26. In a specific example, liquid 26 is cryogenic fuel, and flowing 202 fluid 28 into gap 16 increases a rate of vaporization of the cryogenic fuel. Vaporized cryogenic fuel may then be flowed out of tank 10 via a port 90 for use in a vehicle 300.

As further illustrated in Fig. 2, method 200 optionally comprises using 208 offboard pump or vacuum reservoir 102 to create a partial vacuum within gap 16. Offboard pump or vacuum reservoir 102 create a partial vacuum of lower pressure than a partial vacuum created by flow component 18. Creating a vacuum of lower pressure can further decrease heat transfer into interior 22 of tank 10 and allow for storage of liquid 26 for longer periods of time. For example, a vehicle 300 uses flow component 18 to create an initial partial vacuum within gap 16 during operation of vehicle 300, and then vehicle 300 uses offboard pump or vacuum reservoir 102 to create a partial vacuum of lower pressure after flow component 18 created the initial partial vacuum.

Illustrative, non-exclusive examples of inventive subject matter according to the present disclosure are described in the following enumerated paragraphs:
A. An apparatus (50) comprising:
   a tank (10) comprising:
      an inner wall (12) configured to hold liquid (26);
      an outer wall (14) surrounding the inner wall (12);
      a gap (16) separating the inner wall (12) and the outer wall (14); and
   a flow component (18) configured to:
      in a first mode, flow fluid (28) into the gap (16),
      in a second mode, flow the fluid (28) out of the gap (16).
A1. The apparatus (50) of paragraph A, wherein the flow component (18) is further configured to create a partial vacuum in the gap (16) in the second mode.
A2. The apparatus (50) of any of paragraphs A-A1, wherein the flow component (18) comprises at least one valve (82).
A3. The apparatus (50) of any of paragraphs A-A2, wherein the flow component (18) comprises one valve (82) and one pump (80).
A4. The apparatus (50) of any of paragraphs A-A3, wherein the gap (16) comprises at least two zones (24), and wherein the flow component (18) is configured to selectively flow the fluid (28) into at least one zone (24) of the at least two zones (24).
A5. The apparatus (50) of any of paragraphs A-A4, wherein the liquid (26) is a cryogenic fuel, helium, a pressurant, or an oxidizer.
A6. The apparatus (50) of any of paragraphs A-A5, wherein the inner wall (12) and the outer wall (14) are comprised of aluminum, steel, brass, composite material, composite overwrap, or a combination of metallic material and composite material.
A7. The apparatus (50) of any of paragraphs A-A6, wherein the inner wall (12), the gap (16), and the outer wall (14) form an insulated double wall (30) configured to reduce heat transfer into an interior (22) of the inner wall (12) when a partial vacuum is present in the gap (16).
A8. The apparatus (50) of any of paragraphs A-A7, wherein the fluid (28) is inert.
A9. The apparatus (50) of any of paragraphs A-A8, wherein the fluid (28) is air.
A10. The apparatus (50) of any of paragraphs A-A8, wherein the fluid (28) is nitrogen, helium, or argon.
A11. The apparatus (50) of any of paragraphs A-A10, wherein the fluid (28) is non-reactive with ambient air and is not a greenhouse gas.
A12. The apparatus (50) of any of paragraphs A-A11, wherein a boiling point of the fluid (28) is greater than a boiling point of the liquid (26) and the boiling point of the fluid (28) is less than a minimum ambient temperature, and wherein the minimum ambient temperature is -60 degrees Celsius.
A12.1 The apparatus (50) of any of paragraphs A-A11, wherein a freezing point of the fluid (28) is less than a boiling point of the liquid (26), wherein a boiling point of the fluid (28) is greater than a boiling point of the liquid (26) and the boiling point of the fluid (28) is less than a minimum ambient temperature, wherein the boiling point of the liquid (26) is less than the minimum ambient temperature, and wherein the minimum ambient temperature is -60 degrees Celsius.
A12.2 The apparatus (50) of any of paragraphs A-A11, wherein a freezing point of the fluid (28) is less than a working temperature of the liquid (26), wherein a boiling point of the fluid (28) is greater than a working temperature of the liquid (26) and the boiling point of the fluid (28) is less than a minimum ambient temperature, wherein the boiling point of the liquid (26) is less than the minimum ambient temperature, wherein the minimum ambient temperature is -60 degrees Celsius, and wherein the working temperature of the liquid (26) is between -265 and -42 degrees Celsius.
B. A system (100) comprising:
   the apparatus (50) of any of paragraphs A-A12.2; and
   a reservoir (20), wherein, in the first mode, the flow component (18) is configured to flow the fluid (28) from the reservoir (20) into the gap (16) and, in the second mode, the flow component (18) is configured to flow the fluid (28) from the gap (16) into the reservoir (20).
B1. The system (100) of paragraph B, wherein the system (100) further comprises an offboard pump or vacuum reservoir (102) configured to be selectively connected to the gap (16), and wherein the offboard pump or vacuum reservoir (102) is configured to create a partial vacuum within gap (16) of lower pressure than a/the partial vacuum created by the flow component (18).
B2. The system (100) of any of paragraphs B-B1, wherein the fluid (28) is air, wherein, in the first mode, the reservoir (20) is connected to the gap (16), and wherein the reservoir (20) comprises a passage (36) connected to atmosphere or a compressor of a turbine.
B3. The system (100) of any of paragraphs B-B2, wherein, in the second mode, the gap (16) is connected to the reservoir (20), and wherein the reservoir (20) comprises a vacuum reservoir (38).
B4. The system (100) of any of paragraphs B-B1, wherein the flow component (18) is connected to the reservoir (20), wherein the reservoir (20) comprises a vessel (34) configured to hold the fluid (28), and wherein the flow component (18) is configured to flow the fluid (28) from the reservoir (20) into the gap (16) in the first mode and is configured to flow the fluid (28) from the gap (16) into the reservoir (20) in the second mode.
B5. A vehicle (300), comprising the system (100) of any of paragraphs B-B4.
B5.1. The vehicle (300) of paragraph B5, wherein the vehicle (300) is an aircraft or a spacecraft.
C. A method (200) comprising:
   flowing (202) the fluid (28) into the gap (16) of the tank 10 of the apparatus (50) of any of paragraphs A-A12.2; and
   flowing (204) the fluid (28) out of the gap (16).
C1. The method (200) of paragraph C, further comprising creating (206) a/the partial vacuum within the gap (16).
C2. The method (200) of any of paragraphs C-C1, wherein the flowing (202) the fluid (28) into the gap (16) increases a rate of heat transfer to the liquid (26) within the inner wall (12), and wherein the flowing (204) the fluid (28) out of the gap (16) decreases the rate of heat transfer to the liquid (26) within the inner wall (12).
C3. The method (200) of any of paragraphs C-C2, wherein the liquid (26) is a/the cryogenic fuel, and wherein the flowing (202) the fluid (28) into the gap (16) increases a rate of vaporization of the cryogenic fuel.
C4. The method (200) of any of paragraphs C-C3, further comprising using (208) an/the offboard pump or vacuum reservoir (102) to create a/the partial vacuum within the gap (16), and wherein the offboard pump or vacuum reservoir (102) creates the partial vacuum of lower pressure than the partial vacuum created by the flow component (18).
C5. The method (200) of any of paragraphs C-C4, wherein the flowing (204) the fluid (28) out of the gap (16) comprises at least one of the flow component (18) pumping the fluid (28) out of the gap (16) and connecting the gap (16) to a/the vacuum reservoir (38).
C6. The method (200) of any of paragraphs C-C5, wherein the flowing (202) the fluid (28) into the gap (16) comprises changing a phase (210) of the fluid (28) after the fluid (28) enters the gap (16).
D. The use of the apparatus (50) of any of paragraphs A-A12.2 to flow the fluid (28) into gap (16) and flow the fluid (28) out of the gap (16).
E. The use of the system (100) of any of paragraphs B- B5.1 to flow the fluid (28) into the gap (16) and flow the fluid (28) out of the gap (16).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Nevertheless, the scope of protection is determined by the appended claims.

## Claims

1. An apparatus (50) comprising:
a tank (10) comprising:
an inner wall (12) configured to hold liquid (26);
an outer wall (14) surrounding the inner wall (12);
a gap (16) separating the inner wall (12) and the outer wall (14); and
a flow component (18) configured to:
in a first mode, flow fluid (28) into the gap (16),
in a second mode, flow the fluid (28) out of the gap (16).

2. The apparatus (50) of claim 1, wherein the flow component (18) is further configured to create a partial vacuum in the gap (16) in the second mode.

3. The apparatus (50) of claim 1 or 2, wherein the flow component (18) comprises at least one of a pump (80) and a valve (82), preferably wherein the flow component (18) comprises one valve (82) and one pump (80).

4. The apparatus (50) of any one of claims 1 to 3 comprising said liquid (26) and said fluid (28), and wherein the liquid (26) is a cryogenic fuel, helium, a pressurant, or an oxidizer, and preferably wherein the fluid (28) is air, nitrogen, helium, or argon.

5. The apparatus (50) of claim 4, wherein a boiling point of the fluid (28) is greater than a boiling point of the liquid (26) and the boiling point of the fluid (28) is less than a minimum ambient temperature, and wherein the minimum ambient temperature is -60 degrees Celsius.

6. A system (100) comprising an apparatus according to any one of claims 1 to 5, and further comprising:
a reservoir (20), wherein, in the first mode, the flow component (18) is configured to flow the fluid (28) from the reservoir (20) into the gap (16) and, in the second mode, the flow component (18) is configured to flow the fluid (28) from the gap (16) into the reservoir (20).

7. The system (100) of claim 6, wherein the system (100) further comprises an offboard pump or vacuum reservoir (102) configured to be selectively connected to the gap (16), and wherein the offboard pump or vacuum reservoir (102) is configured to create a partial vacuum within the gap (16) of lower pressure than a partial vacuum created by the flow component (18).

8. The system (100) of claim 6 or 7, wherein the fluid (28) is air, wherein, in the first mode, the reservoir (20) is connected to the gap (16), and wherein the reservoir (20) comprises a passage (36) configured to connect to atmosphere or a compressor of a turbine.

9. The system (100) of any one of claims 6 to 8, wherein, in the second mode, the gap (16) is connected to the reservoir (20), and wherein the reservoir (20) comprises a vacuum reservoir (102).

10. The system (100) of anyone of claims 6 to 9, wherein the flow component (18) is connected to the reservoir (20), wherein the reservoir (20) comprises a vessel (34) configured to hold the fluid (28), and wherein the flow component (18) is configured to flow the fluid (28) from the reservoir (20) into the gap (16) in the first mode and is configured to flow the fluid (28) from the gap (16) into the reservoir (20) in the second mode.

11. An aircraft (300) comprising the system (100) according to any one of claims 6 to 10.

12. A method (200) comprising:
flowing (202) fluid (28) into a gap (16) of a tank (10), wherein the tank (10) comprises:
an inner wall (12) configured to hold liquid (26), preferably a cryogenic fuel;
an outer wall (14) surrounding the inner wall (12);
the gap (16) separating the inner wall (12) and the outer wall (14); and
flowing (204) the fluid (28) out of the gap (16).

13. The method (200) of claim 12, further comprising creating (206) a partial vacuum within the gap (16).

14. The method (200) of claim 12 or 13, wherein the flowing (204) the fluid (28) out of the gap (16) comprises at least one flow component (18) pumping the fluid (28) out of the gap (16) and connecting the gap (16) to a vacuum reservoir (102).

15. The method (200) of any one of claims 12 to 14, wherein the flowing (202) the fluid (28) into the gap (16) comprises changing a phase of the fluid (28) after the fluid (28) enters the gap (16).
